# EUROPÄISCHE PATENTSCHRIFT

(11) **EP 2 880 315 B1**
(45) Veröffentlichungstag und Bekanntmachung des Hinweises auf die Patenterteilung: **20.09.2017**
(21) Anmeldenummer: 13739146.2
(22) Anmeldetag: 18.07.2013
(51) Int. Cl.: F15B 13/01, F16K 31/40

(54) **VENTIL, INSBESONDERE VORGESTEUERTES PROPORTIONAL-WEGESITZVENTIL**
VALVE, IN PARTICULAR PILOT-OPERATED PROPORTIONAL DIRECTIONAL POPPET VALVE
SOUPAPE, EN PARTICULIER DISTRIBUTEUR À SIÈGE PROPORTIONNEL PILOTÉ

(30) Priorität: 03.08.2012 DE 102012015354
(43) Veröffentlichungstag der Anmeldung: 10.06.2015
(73) Patentinhaber: Hydac Fluidtechnik GmbH, 66280 Sulzbach/Saar (DE)
(72) Erfinder: BRUCK, Peter, 66484 Althornbach (DE); BILL, Markus, 66265 Heusweiler (DE)
(74) Vertreter: Bartels, Martin Erich Arthur
(86) Internationale Anmeldenummer: PCT/EP2013/002129
(87) Internationale Veröffentlichungsnummer: WO 2014/019647

(56) Entgegenhaltungen:
- EP-A1- 2 363 623
- CH-A5- 671 080
- DE-A1- 10 102 409
- DE-A1- 19 755 120
- DE-A1- 19 955 522

## Beschreibung

Die Erfindung betrifft ein Ventil, insbesondere ein vorgesteuertes Proportional-Wegesitzventil, mit den Merkmalen im Oberbegriff von Anspruch 1.

Das proportionale Lastabsenken von Lastgabeln bei Gabelstaplern wird häufig von Sitzventilen mit stetigem Öffnungsverhalten mit veranlasst. Die dahingehenden Sitzventile können direkt betätigt oder vorgesteuert sein. Der Einsatz von Sitzventilen ist insbesondere deshalb geboten, weil von den Gabelstaplerherstellern ein sogenanntes "staplerdichtes" Lastverhalten gefordert wird, welches nur sehr geringe Leckagen zulässt. Durch das Vermeiden von Leckagen im hydraulischen Kreis ist sichergestellt, dass die Lastgabel mit oder ohne Beladung nicht eigenmächtig absinken kann, was ein Sicherheitsproblem darstellen würde.

Eine lastunabhängige Maximal-Volumenstrombegrenzung wird bei bekannten Lösungen von einem in Reihe mit den anderen Komponenten des hydraulischen Kreises geschalteten Konstant-Volumenstromregler übernommen. Auf diese Weise wird die Forderung erfüllt, dass eine maximale Senkgeschwindigkeit einer Lastgabel unabhängig vom anstehenden Lastdruck nicht überschritten werden darf. Die dahingehend bekannten Steuervorrichtungen sind insofern nachteilig, als beim Absenken der Lastgabel ohne Last nur das Eigengewicht der bewegten Teile, insbesondere in Form der Lastgabel, am Hubmast zur Verfügung steht, um das Hydraulikfluid vom Arbeitszylinder (Plunger-Zylinder) zurück zum Tank als Bestandteil des hydraulischen Kreises zu fördern. Bei bestimmten Hubmastausführungen kann der Druck am Zylinder auf Werte < 10 bar abfallen. Je mehr Komponenten nun beim Absenken durchströmt werden müssen, desto geringer wird der sich einstellende Volumenstrom ausfallen. Dabei stellt der bekannte Konstant-Volumenstromregler eine besonders hohe Hürde dar, weil seine Zulaufblende so klein gewählt werden muss, dass sich eine Regeldruckdifferenz von mindestens 7 bar einstellen kann. Kleinere Regeldrücke würden zu instabilem Verhalten im hydraulischen Kreis der Arbeitseinrichtung führen und können gleichfalls aus Sicherheitsgründen nicht hingenommen werden. Darüber hinaus darf es auch bei kleinen Regeldruckdifferenzen keine merklichen Sinkgeschwindigkeitseinbußen geben. Der Einsatz einer Maximal-Volumenstrombegrenzung hat darüber hinaus den Nachteil, dass beim Übergang von der Maximal-Volumenstrombegrenzung zurück in die proportionale Kennlinie ein nachteiliger Rücksprung auftritt, der sich in einer diskontinuierlichen Bewegung einer Lastgabel bemerkbar macht, was ein weiteres Sicherheitsproblem darstellen kann. Letztlich verursacht ein in Reihe geschalteter Stromregler einen nicht unerheblichen Druckverlust, der das Senken der Last stark verlangsamt.

Zusätzlich wird von den Kunden eine fallende Kennlinie für den Volumenstromregler gefordert. So soll aus Sicherheits- und Praktikabilitätsgründen gewährleistet sein, dass mit größer werdender Last die Senkgeschwindigkeit gleich oder geringer ausfällt. Wird dies bei den bekannten Steuervorrichtungen über den Konstant-Volumenstromregler durchgeführt, führt dies gleichfalls prinzipiell zu einer erhöhten Instabilität innerhalb des hydraulischen Kreises.

Als Alternative zur Lösung mit einem in Reihe geschalteten Maximalvolumenstromregler wurde von der Anmelderin in der DE 101 02 409 A1 eine Steuervorrichtung offenbart, bei der in einem hydraulischen Kreis ein Proportional-Wegesitzventil und eine Druckwaage in Reihe geschaltet sind. Seitens der Anwender dieser Lösungen gibt es nun die weitergehende Forderung nach einem noch kostengünstigeren und Bauraum sparenden Ventil. Die DE 199 55 522 A1 beschreibt ein Ventil, insbesondere vorgesteuertes Proportional-Wegesitzventil, mit einem Ventilgehäuse, das einen Fluideinlass und einen Fluidauslass aufweist, wobei der Fluidstrom zwischen Fluideinlass und Fluidauslass durch einen Hauptkolben regelbar ist, wobei auf einer Rückseite des Hauptkolbens eine Vorsteuerventilkammer mit einem durch eine Betätigungseinrichtung bewegbaren Vorsteuerventilschließglied vorgesehen ist, mit welchem der Fluidstrom zwischen der Vorsteuerventilkammer und dem Fluidauslass regelbar ist, wobei zwischen dem Fluideinlass und der Vorsteuerventilkammer eine einzige Zulaufblende angeordnet ist, wobei der Öffnungsquerschnitt der Zulaufblende durch ein Steuerelement verkleinerbar ist. Ein gattungsgemäßes Proportional-Wegesitzventil ist aus DE 197 55 120 A1 bekannt. Der Erfindung liegt daher die Aufgabe zugrunde, ein Ventil, insbesondere ein vorgesteuertes Proportional-Wegesitzventil, aufzuzeigen, das im Wesentlichen leckagefrei ist, dessen Senkgeschwindigkeit unabhängig vom anstehenden Lastdruck ist, das bei weniger als 10 bar Druckdifferenz ohne merkliche Sinkgeschwindigkeitseinbuße arbeitet, das zudem kostengünstig ist und das wenig Bauraum beansprucht.

Diese Aufgabe wird durch ein Ventil, insbesondere ein vorgesteuertes Proportional-Wegesitzventil, mit den Merkmalen von Anspruch 1 gelöst. Vorteilhafte Ausführungsformen des Ventils gehen aus den Unteransprüchen hervor.

Gemäß dem Kennzeichen von Anspruch 1 ist vorgesehen, dass die Zulaufblende mehrere Blendenbohrungen aufweist und dass der Öffnungsquerschnitt von wenigstens einer der Blendenbohrungen durch das Steuerelement verkleinerbar ist.

Die Aufspaltung der Zulaufblende in mehrere Blendenbohrungen ermöglicht es, die Zulaufblende sehr einfach in mehreren Öffnungsstufen zu schalten.

Der Kerngedanke der Erfindung ist, einen Stromregler in das Ventil zu integrieren. Erfindungsgemäß ist deshalb der Öffnungsquerschnitt der Zulaufblende durch ein Steuerelement verkleinerbar. Der verkleinerte Zulaufblendenquerschnitt bewirkt, dass der Druck in der Vorsteuerventilkammer sinkt. Mit dieser Maßnahme ist es möglich, den Öffnungshub des Hauptkolbens zusätzlich zur Regulierung am Vorsteuerventilsitz aktiv zu regeln. Je kleiner der Differenzdruck zwischen Fluideinlass und Fluidauslass, desto größer kann der Öffnungshub des Ventils eingeregelt werden. Somit ist die Stromregelfunktion ermöglicht.

Vorteilhaft wird durch diese Lösung ein zusätzlicher in Reihe geschalteter Konstant-Volumenstromregler oder eine ebenfalls in Reihe geschaltete Druckwaage eingespart. Dadurch ergeben sich geringere Herstellkosten und ein wesentlich verringerter erforderlicher Bauraum.

Dadurch, dass nur noch das die Vorsteuerventilkammer passierende Fluid hinsichtlich des Volumenstroms geregelt wird, anstelle des gesamten Fluidstroms, wie bei den bekannten Lösungen mit einem nachgeschalteten Volumenstromregler oder eine Druckwaage, ergibt sich auch ein geringerer Druckverlust und damit eine erhöhte Effizienz.

Mithin ist es möglich, den Öffnungshub des Hauptkolbens vom Differenzdruck des Ventils abhängig zu machen. Je größer der Differenzdruck, desto kleiner kann der Öffnungshub des Ventils eingestellt werden. Somit ist eine Stromregelfunktion möglich, bei der eine Zulaufmessblende alleine ohne zusätzliche Stromregelkante auskommt. Damit die vom Konstant-Stromregler vorgegebene Vorsteuerfluidmenge die Zulaufmessblende passieren kann, muss je nach Differenzdruck ein verschieden großer Blendenquerschnitt geöffnet werden. Der lastabhängige, variable Öffnungsquerschnitt der Zulaufmessblende ist eine Voraussetzung für einen lastunabhängigen Volumenstrom durch das Ventil.

Bevorzugt ist das Steuerelement dem Vorsteuerventilschließglied zugeordnet. Beispielsweise kann das Steuerelement als radialer Vorsprung am Vorsteuerventilschließglied ausgebildet sein. Mithin kann durch eine axiale oder rotierende Bewegung des Vorsteuerventilschließgliedes der Öffnungsquerschnitt der Zulaufblende verändert werden. Somit muss keine separate Steuereinrichtung für das Steuerelement vorgesehen werden.

Besonders vorteilhaft ist das Steuerelement als Bund am Vorsteuerventilschließglied ausgebildet, wobei der Bund wenigstens eine Druckentlastungsbohrung aufweist. Ein Bund ist ein umlaufender Vorsprung oder Flansch am Vorsteuerventilschließglied. Diese Gestaltung hat den Vorteil, dass das Vorsteuerventilschließglied zusätzlich gegenüber dem Hauptkolben zentriert wird und der Vorsprung am Vorsteuerventilschließglied stets auf die Zulaufblende hin ausgerichtet ist. Es können auch mehrere Druckentlastungsbohrungen vorgesehen sein, die über den Umfang verteilt angeordnet sind.

Die Blendenbohrungen weisen darüber hinaus vorzugsweise gleiche Durchmesser auf. Die Blendenbohrungen können aber auch unterschiedliche Durchmesser haben, um das Regelverhalten des Ventils zusätzlich an die unterschiedlichen anstehenden Lastdrücke anzupassen und um der Regelung eine von der Linearität abweichende Charakteristik zu geben.

Zweckmäßigerweise sind die Blendenbohrungen axial und/oder über den Umfang zueinander versetzt im Hauptkolben angeordnet. Diese Anordnung der Blendenbohrungen erleichtert zusätzlich das Verkleinern des Öffnungsquerschnitts mit Hilfe des Vorsteuerventilschließgliedes. Durch die axiale Verlagerung des Vorsteuerventilschließgliedes relativ zum Hauptkolben können so eine oder mehrere in axialer Richtung hintereinander liegende Blendenbohrungen verschlossen werden. Über den Umfang verteilte Blendenbohrungen sind darüber einfacher herzustellen, da die Blendenbohrungen Abschnitte mit unterschiedlichen Durchmessern aufweisen. Somit werden überlappende Blendenbohrungen oder Schwächungen der Wand des Hauptkolbens durch mehrere, konzentriert angeordnete Blendenbohrungen vermieden.

Zweckmäßigerweise ist zwischen dem Fluideinlass und der Zulaufblende eine Spaltblende vorgesehen, die vorzugsweise in Form eines Ringspalts zwischen Ventilgehäuse und Hauptventilkolben ausgebildet ist. Die Spaltblende hat eine Filtrationsfunktion. Es soll verhindert werden, dass Partikel des Fluids in die stromabwärts gelegenen Einheiten des Vorsteuerventils eindringen. Dies kann zu Verstopfungen des Vorsteuerventils und damit zum Ausfall des Ventils insgesamt führen.

In einer besonders bevorzugten Ausführungsform ist im Hauptkolben in einem Ablauf zwischen Vorsteuerventilkammer und Fluidauslass ein Maximalvolumenstromregler vorgesehen. Durch den Maximalvolumenstromregler kann der Strom des ablaufenden Vorsteuerfluids vorteilhaft lastunabhängig eingestellt werden. Auf diese Weise wird der Druck in der Vorsteuerventilkammer erhöht, so dass der Öffnungshub des Hauptkolbens lastdruckunabhängig verringert wird. Mithin öffnet das Ventil bei einem hohen anstehenden Lastdruck beispielsweise infolge einer hohen Last auf einer Lastgabel eines Gabelstaplers geringer. Die Sinkgeschwindigkeit der Lastgabel wird somit vorteilhaft reduziert. Durch die Integration des Maximalvolumenstromreglers in den Hauptkolben wird praktisch kein zusätzlicher Bauraum benötigt. Mithin ergibt sich gegenüber den Lösungen des Standes der Technik mit nachgeschalteten Regelelementen eine erhebliche Einsparung an Bauraum.

Der Maximalvolumenstromregler weist bevorzugt einen Regelkolben auf, der auf einer Vorderseite vom Druck des aus der Vorsteuerkammer auslaufenden Fluids und auf einer Rückseite von einer Feder beaufschlagt ist. Zusätzlich kann der Regelkolben vom Druck in der Federkammer (dieser ist der mittels der Zulaufblende geminderte Druck) beaufschlagt sein. Diese Konstruktion hat den Vorteil, dass sie mit einer minimalen Anzahl von Teilen auskommt, die sich vorteilhaft nur in einer Richtung bewegen. Ein solcher Maximalvolumenstromregler ist daher einfach herstellbar und einstellbar.

Weiterhin kann im Regelkolben ein Fluiddurchlass vorgesehen sein und durch Bohrungen im Regelkolben und im Hauptkolben können Regelkanten des Maximalvolumenstromreglers gebildet sein, wobei die Größe des durch die Regelkanten begrenzten Öffnungsquerschnitts von der Position des Regelkolbens abhängig ist. Mithin wird die Drosselfunktion des Maximalvolumenstromreglers auf besonders einfache Weise bereitgestellt.

Vorteilhaft weist der Fluiddurchlass eine seitliche Einlassöffnung am Regelkolben auf.

Der Regelkolben kann in eine axiale Bohrung des Hauptkolbens eingesetzt und vorzugsweise durch eine Endkappe in der axialen Bohrung gehalten sein. Diese Anordnung ist besonders effizient herstellbar und bauraumsparend realisierbar.

Vorteilhaft ist vorgesehen, dass der Hauptkolben über das Vorsteuerventilschließglied durch eine Feder in eine Schließstellung beaufschlagt ist. Dies gewährleistet, dass das Ventil in der Neutralstellung weitgehend leckagefrei ist, so dass es während einer längeren Stillstandszeit beispielsweise nicht zu einem Absinken einer Lastgabel kommt. Darüber hinaus wirkt bei unterbrochenem Vorsteuerfluidstrom auf die Rückseite des Regelkolbens der Lastdruck am Fluideinlass, wodurch die Schließkraft des Hauptkolbens verstärkt und eine sehr gute Dichtungswirkung zwischen Fluideinlass und Fluidauslass erreicht wird.

Das Vorsteuerventilschließglied ist von der Betätigungseinrichtung von einem Vorsteuerventilsitz wegziehbar. Die ziehende Ausführung der Betätigungseinrichtung ist ebenfalls unter dem oben genannten Sicherheitsaspekt vorteilhaft.

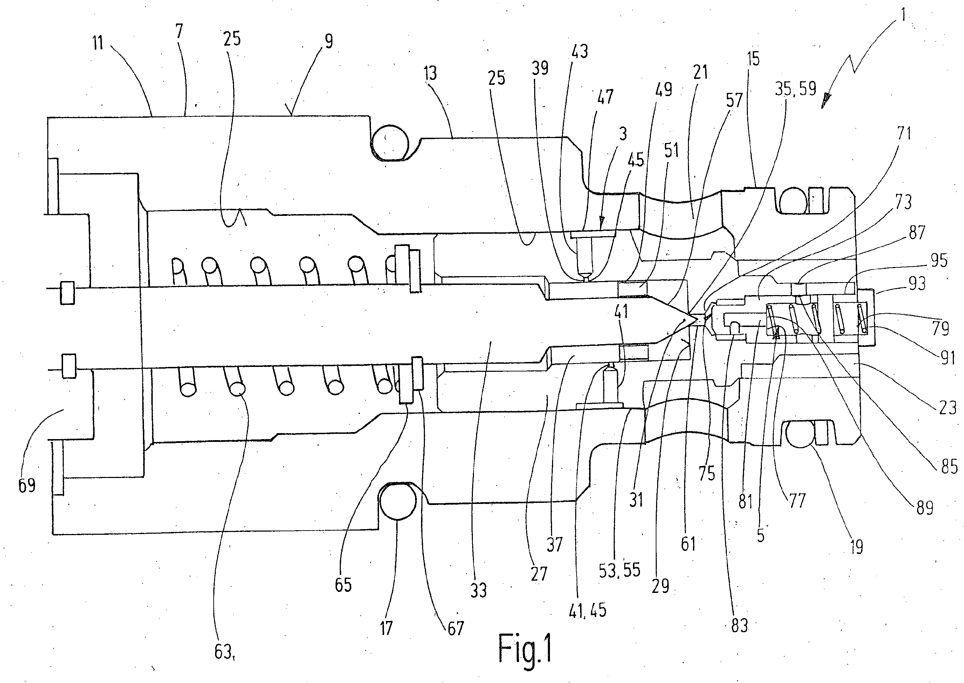

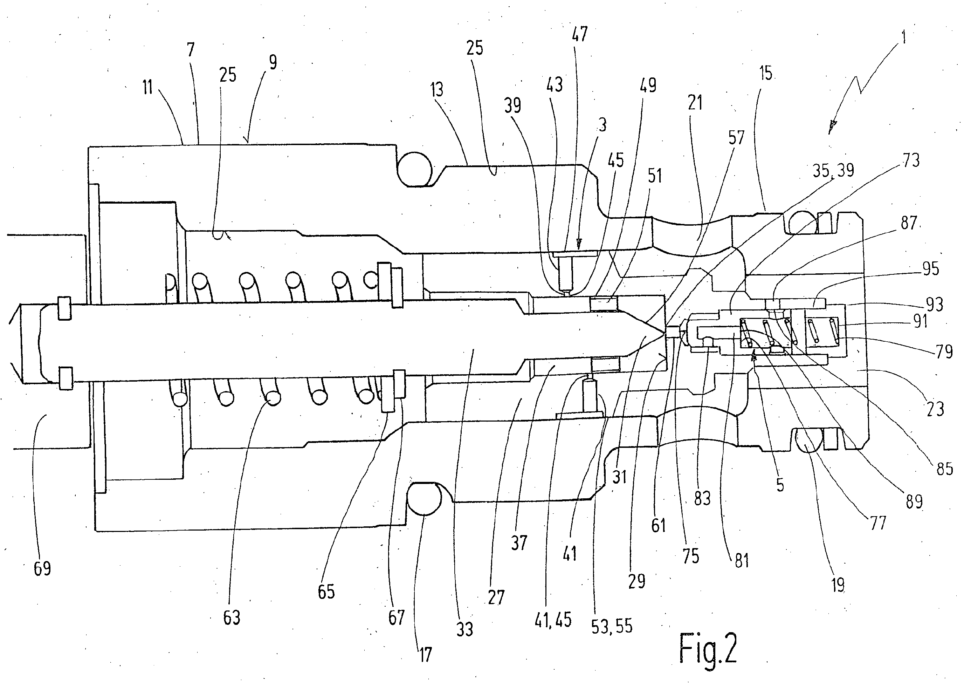

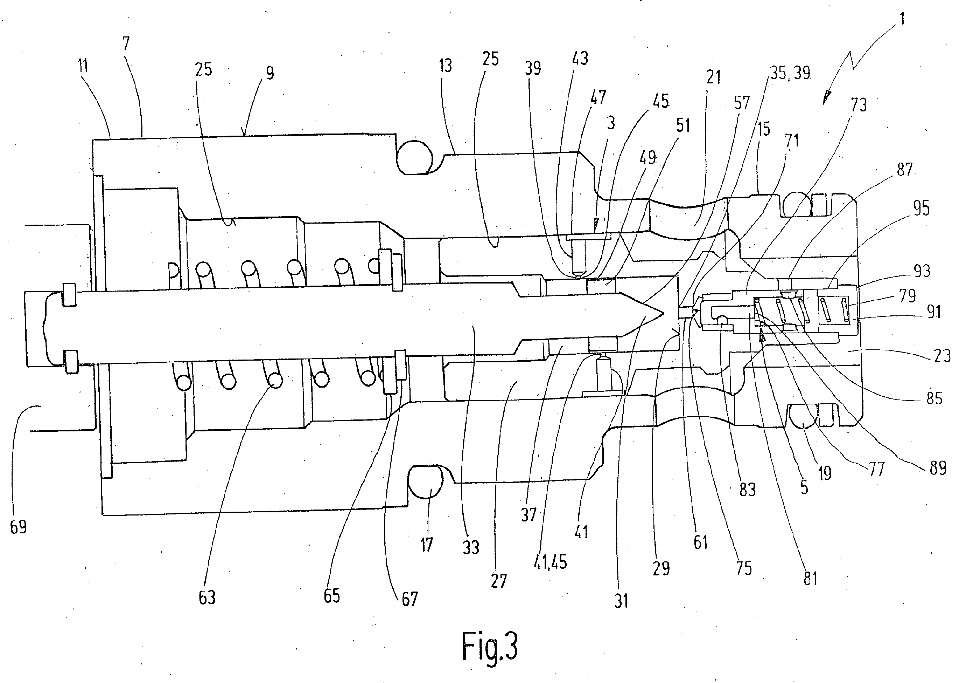

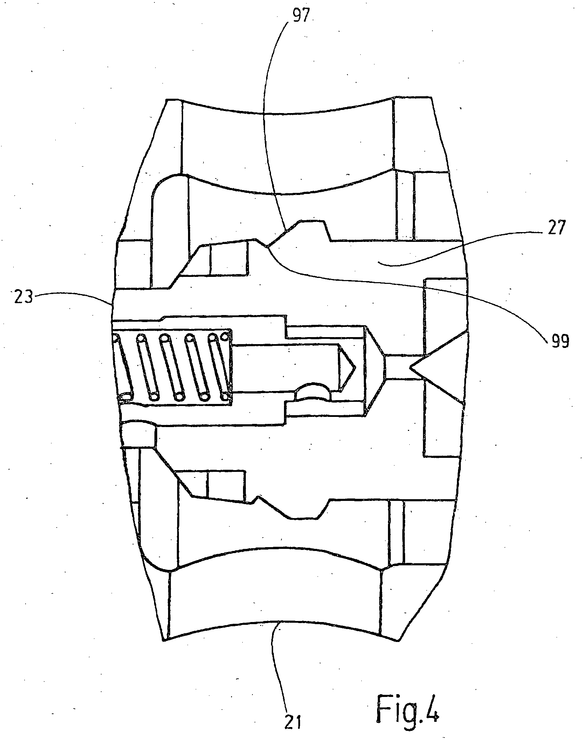

Die Erfindung ist nachfolgend anhand von einem in den Figuren dargestellten Ausführungsbeispiel näher erläutert. Die Fig. 1 bis 3 zeigen das erfindungsgemäße Ventil in drei Schaltzuständen. In Fig. 1 ist das Ventil in der geschlossenen Neutralstellung gezeigt. Fig. 2 zeigt das Ventil der Fig. 1 in einer Arbeitsstellung bei einem geringen anstehenden Lastdruck und Fig. 3 zeigt das Ventil der Fig. 1 in einer Arbeitsstellung bei einem hohen anstehenden Lastdruck, bei dem der Öffnungshub des Hauptkolbens eingeregelt, d.h. verringert, ist. Fig. 4 zeigt einen Ausschnitt des Hauptkolbens im Bereich des Fluideinlasses im Längsschnitt.

In den Fig. 1 bis 3 ist das Ventil 1 als vorgesteuertes Proportional-Wegeventil in Cartridge-Bauweise ausgeführt. Die Konstruktion geht von einem herkömmlichen proportionalen Wege-Sitzventil aus, in das eine verkleinerbare Zulaufblende 3 und ein Maximalvolumenstromregler 5 integriert wurden.

Das Ventil 1 ist in einen nicht näher dargestellten Ventilblock einsetzbar. Das Ventilgehäuse 7 ist dazu auf der Umfangsseite 9 stufenweise verjüngt ausgeführt, wobei die einzelnen Stufen als Sechskantstufe 11, als Gewindestufe 13 und als einfache Stufe 15 ausgeführt sind sowie über umlaufende Ringdichtungen 17, 19 abgedichtet sind. Das Ventilgehäuse 7 weist einen seitlichen Fluideinlass 21 und einen bodenseitigen Fluidauslass 23 auf. In eine axiale Bohrung 25 des Ventilgehäuses 7 ist ein Hauptkolben 27 eingesetzt. Durch den Hauptkolben 27 ist der Fluidstrom zwischen dem Fluideinlass 21 und dem Fluidauslass 23 regelbar.

Auf einer Rückseite 29 des Hauptkolbens 27 ist ein Vorsteuerventil 31 vorgesehen. Das Vorsteuerventil 31 umfasst ein Vorsteuerventilschließglied 33, welches mit einem Vorsteuerventilsitz 35 im Hauptkolben 27 zusammenwirkt.

Zur Begrenzung des Zuflusses von Vorsteuerfluid zur Vorsteuerventilkammer 37 ist im Hauptkolben 27 die Zulaufblende 3 vorgesehen. Die Zulaufblende 3 weist mehrere Blendenbohrungen 39, 41 auf. Jede Blendenbohrung 39, 41 umfasst zwei Abschnitte 43, 45. In einem radial äußeren Abschnitt 43 ist der Durchmesser der Blendenbohrungen 39, 41 größer als in einem inneren Abschnitt 45. Die Blendenbohrungen 39, 41 sind axial und über den Umfang versetzt im Hauptkolben 27 angeordnet. Alle Blendenbohrungen 39, 41 werden über eine umlaufende Umfangsnut 47 des Hauptkolbens 27 gleichmäßig mit Vorsteuerfluid versorgt. Zur Verkleinerung des Öffnungsquerschnitts der Zulaufblende 3 ist am Vorsteuerventilschließglied 33 ein Steuerelement 49 in Form eines Bundes vorgesehen, durch welchen die Blendenbohrungen 39, 41 in Abhängigkeit von der axialen Stellung des Vorsteuerventilschließgliedes 33 relativ zum Hauptkolben 27 verkleinerbar oder ganz verschließbar sind. Je weiter das Vorsteuerventilschließglied 33 aus dem Hauptkolben 27 herausgezogen wird, desto mehr wird der Öffnungsquerschnitt der Zulaufblende 3 reduziert. Der Bund 49 weist Druckentlastungsbohrungen 51 auf, die über den Umfang verteilt vorgesehen sind. Durch diese Gestaltung wird das Regelverhalten des Vorsteuerventilschließgliedes 33 aufgrund des Bundes 49 nur unmerklich verändert. Die Zulaufblende 3 kann in der Nähe oder in einem größeren axialen Abstand zum Vorsteuerventilsitz 35 vorgesehen sein. Wenn die Zulaufblende 3 hinreichend nahe am Vorsteuerventilsitz 35 angeordnet ist, überlappen sich die Regelungsbereiche des Vorsteuerventils 31 und der Steuerung des Öffnungsquerschnittes der Zulaufblende 3. Bei ausreichend großem Abstand muss sich das Vorsteuerventilschließglied 33 zunächst soweit vom Vorsteuerventilsitz 35 entfernen, dass dieses vollständig geöffnet ist, ehe es zu einer Verkleinerung des Öffnungsquerschnittes der Zulaufblende 3 kommt.

Der Zulaufblende 3 ist zusätzlich eine Spaltblende 53 zugeordnet. Die Spaltblende 53 befindet sich zwischen dem Fluideinlass 21 und der Zulaufblende 3 und ist durch einen Ringspalt 55 zwischen dem Hauptkolben 27 und dem Ventilgehäuse 7 ausgebildet. Die Spaltblende 53 hat eine Filtrationsfunktion. Es soll verhindert werden, dass größere Partikel des Fluids in das Vorsteuerventil 31 eindringen und es verstopfen können. Dies würde unweigerlich zu einem Ausfall des Ventils 1 führen.

Das Vorsteuerventilschließglied 33 hat einen Spitzkegel 57 und wirkt mit dem daran angepassten Vorsteuerventilsitz 35 an einem Ende 59 einer axialen Bohrung 61 des Hauptkolbens 27 zusammen. Das Vorsteuerventilschließglied 33 ist durch eine steife Feder 63, die sich über eine Scheibe 65 und einen Sprengring 67 am Vorsteuerventilschließglied 33 abstützt, beaufschlagt. Somit ist bei einer inaktiven Betätigungseinrichtung 69 das Ventil 1 in die Sperrstellung (Fig. 1) vorgespannt.

Die Betätigungseinrichtung 69 ist als ziehende Betätigungseinrichtung 69 ausgeführt, um das Vorsteuerventilschließglied 33 bei Bestromung vom Vorsteuerventilsitz 35 wegzuziehen.

Stromab des Vorsteuerventilsitzes 35 befindet sich im Hauptkolben 27 der Maximalvolumenstromregler 5. Der Maximalvolumenstromregler 5 ist in einem Ablauf 71 zwischen der Vorsteuerkammer 37 und dem Fluidauslass 23 angeordnet. Der Maximalvolumenstromregler 5 umfasst einen Regelkolben 73, der auf der Vorderseite 75 vom Vorsteuerfluidstrom und auf einer Rückseite 77 durch eine Feder 79 in entgegengesetzter Richtung beaufschlagt ist. Der Regelkolben 73 weist einen Fluiddurchlass 81 mit einer seitlichen, als Messblende dienenden Einlassöffnung 83 auf. Mithin kann das Vorsteuerfluid in den Regelkolben 73 eindringen und durch radiale, eine Regelblende bildende Bohrungen 85, 87 im Regelkolben 73 und im Hauptkolben 27 in den Fluidauslass 23 abfließen. Die Messblende hat eine Stromregelfunktion. Abhängig von der Öffnungsstellung der durch die Bohrungen 85, 87 gebildeten Regelblende ist die Rückseite 77 des Regelkolbens 73 vom mittels der Regelblende reduzierten Druckes beaufschlagt. Die Bohrungen 85, 87 in dem Regelkolben 73 und dem Hauptkolben 27 bilden dabei Regelkanten des Maximalvolumenstromreglers 5 aus, die den Öffnungsquerschnitt in Abhängigkeit von der Position des Regelkolbens 73 begrenzen. Die Feder 79 ist zwischen einer Ausnehmung 89 des Regelkolbens 73 und einer Ausnehmung 91 einer im Hauptkolben 27 befestigten Endkappe 93 positioniert. Um die Konstruktion so einfach wie möglich zu halten, ist der Regelkolben 73 in die axiale Bohrung 61 des Hauptkolbens 27 eingesetzt. Die Endkappe 93 ist in ein Innengewinde 95 der axialen Bohrung 61 eingeschraubt oder in der axialen Bohrung 61 klemmend gehalten.

Zusätzlich ist eine einstellbare maximale Begrenzung des Öffnungshubes des Hauptkolbens 27 vorgesehen. Mit Hilfe einer mechanisch einstellbaren Maximal-Hubbegrenzung an der Betätigungseinrichtung 69 ist es möglich, den maximalen Volumenstrom des Ventils 1 unabhängig von der Magnetkraft der Betätigungseinrichtung 69 mechanisch einzustellen.

In der Fig. 4 ist ein Ausschnitt des Hauptkolbens 27 im Bereich des Fluideinlasses 21 gezeigt. Der Hauptkolben 27 ist unmittelbar angrenzend an eine kegelförmige Hauptventilfläche 97 in Richtung auf den Fluidauslass 23 mit einer umlaufenden Einschnürung 99 versehen, die V-förmig ausgebildet ist.

Auf diese Weise wird ein Ventil 1 bereitgestellt, dessen Öffnungshub einerseits abhängig ist von der Betätigungseinrichtung 69 und andererseits vom am Fluideinlass 21 anstehenden Lastdruck. Ein hoher Lastdruck bewirkt, dass der Öffnungshub geringer ausfällt. Ist der Lastdruck zu gering kann durch Vergrößern der Zulaufblende 3 der Öffnungshub vergrößert werden. Damit werden die Forderungen nach einem leckagefreien Ventil 1, das auch bei einer geringen Druckdifferenz einen gleichmäßigen Volumenstrom gewährleistet und das unabhängig vom anstehenden Lastdruck ist, erfüllt.

Die erfindungsgemäße Lösung benötigt ob der Integration der Volumenstromregelung zudem weniger Bauraum als die bekannten Lösungen, bei denen einem herkömmlichen Proportional-Wegesitzventil ein Maximalvolumenstromregler oder eine Druckwaage nachgeschaltet ist. Letztlich ist es auch kostengünstiger herstellbar.

## Patentansprüche

1. Ventil, insbesondere vorgesteuertes Proportional-Wegesitzventil, mit einem Ventilgehäuse (7), das einen Fluideinlass (21) und einen Fluidauslass (23) aufweist, wobei der Fluidstrom zwischen Fluideinlass (21) und Fluidauslass (23) durch einen Hauptkolben (27) regelbar ist, wobei auf einer Rückseite (29) des Hauptkolbens (27) eine Vorsteuerventilkammer (37) vorgesehen ist mit einem durch eine Betätigungseinrichtung (69) bewegbaren Vorsteuerventilschließglied (33), mit welchem der Fluidstrom zwischen der Vorsteuerventilkammer (37) und dem Fluidauslass (23) regelbar ist, wobei zwischen dem Fluideinlass (21) und der Vorsteuerventilkammer (37) eine Zulaufblende (3) angeordnet ist, wobei der Öffnungsquerschnitt der Zulaufblende (3) durch ein Steuerelement (49) verkleinerbar ist, **dadurch gekennzeichnet, dass** die Zulaufblende (3) mehrere Blendenbohrungen (39, 41) aufweist und dass der Öffnungsquerschnitt von wenigstens einer der Blendenbohrungen (39, 41) durch das Steuerelement (49) verkleinerbar ist, wobei es die Aufspaltung der Zulaufblende (3) in mehrere Blendenbohrungen ermöglicht, die Zulaufblende (3) in mehreren Öffnungsstufen zu schalten.

2. Ventil nach Anspruch 1, **dadurch gekennzeichnet, dass** das Steuerelement (49) dem Vorsteuerventilschließglied (33) zugeordnet ist.

3. Ventil nach Anspruch 2, **dadurch gekennzeichnet, dass** das Steuerelement (49) als radialer Vorsprung am Vorsteuerventilschließglied (33) ausgebildet ist.

4. Ventil nach Anspruch 3, **dadurch gekennzeichnet, dass** das Steuerelement (49) als Bund am Vorsteuerventilschließglied (33) ausgebildet ist, wobei der Bund (49) wenigstens eine Druckentlastungsbohrung (51) aufweist.

5. Ventil nach einem der vorhergehenden Ansprüche, **dadurch gekennzeichnet, dass** die Blendenbohrungen (39, 41) gleiche Durchmesser aufweisen.

6. Ventil nach einem der vorhergehenden Ansprüche, **dadurch gekennzeichnet, dass** die Blendenbohrungen (39, 41) axial und/oder über den Umfang zueinander versetzt im Hauptkolben (27) angeordnet sind.

7. Ventil nach einem der vorhergehenden Ansprüche, **dadurch gekennzeichnet, dass** zwischen Fluideinlass (21) und Zulaufblende (3) eine Spaltblende (53) vorgesehen ist, die vorzugsweise in Form eines Ringspalts (55) zwischen Ventilgehäuse (7) und Hauptventilkolben ausgebildet (27) ist.

8. Ventil nach einem der vorhergehenden Ansprüche, **dadurch gekennzeichnet, dass** im Hauptkolben (27) in einem Ablauf zwischen Vorsteuerventilkammer (37) und Fluidauslass (23) ein Maximalvolumenstromregler (5) vorgesehen ist.

9. Ventil nach Anspruch 8, **dadurch gekennzeichnet, dass** der Maximalvolumenstromregler (5) einen Regelkolben (73) aufweist, der auf einer Vorderseite (75) vom Druck des aus der Vorsteuerkammer ablaufenden Fluids und auf einer Rückseite (77) von einer Feder (79) beaufschlagt ist.

10. Ventil nach Anspruch 9, **dadurch gekennzeichnet, dass** im Regelkolben (73) ein Fluiddurchlass (81) vorgesehen ist und durch Bohrungen (85, 87) im Regelkolben (73) und im Hauptkolben (27) Regelkanten des Maximalvolumenstromreglers (5) gebildet sind, wobei die Größe des durch die Regelkanten begrenzten Öffnungsquerschnitts von der Position des Regelkolbens (73) abhängig ist.

11. Ventil nach Anspruch 10, **dadurch gekennzeichnet, dass** der Fluiddurchlass (81) eine seitliche Einlassöffnung (83) am Regelkolben (73) aufweist.

12. Ventil nach einem der Ansprüche 9 bis 11, **dadurch gekennzeichnet, dass** der Regelkolben (73) in eine axiale Bohrung (61) des Hauptkolbens (27) eingesetzt ist und vorzugsweise durch eine Endkappe (93) in der axialen Bohrung (61) gehalten ist.

13. Ventil nach einem der vorhergehenden Ansprüche, **dadurch gekennzeichnet, dass** der Hauptkolben (27) über das Vorsteuerventilschließglied (33) durch eine Feder (63) in eine Sperrstellung beaufschlagt ist.

14. Ventil nach einem der vorhergehenden Ansprüche, **dadurch gekennzeichnet, dass** das Vorsteuerventilschließglied (33) von der Betätigungseinrichtung (69) von einem Vorsteuerventilsitz (35) wegziehbar ist.

## Claims

1. A valve, in particular a pilot-operated proportional directional poppet valve, that has a valve housing (7) which has a fluid inlet (21) and a fluid outlet (23), the fluid stream between the fluid inlet (21) and the fluid outlet (23) being adjustable by means of a main piston (27), a pilot valve chamber (37) provided on a rear face (29) of the main piston (27) having a pilot valve closing member (33) which may be moved by an actuating device (69) and by means of which the fluid stream between the pilot valve chamber (37) and the fluid outlet (23) can be adjusted, a supply aperture (3) being disposed between the fluid inlet (21) and the pilot valve chamber (37), the opening cross-section of the supply aperture (3) being able to be reduced by a control element (49), **characterised in that** the supply aperture (3) has a plurality of aperture bores (39, 41) and that the opening cross-section of at least one of the aperture bores (39, 41) can be reduced by the control element (49), the splitting up of the supply aperture (3) into a plurality of aperture bores making it possible to control the supply aperture (3) in a plurality of opening stages.

2. The valve according to Claim 1, **characterised in that** the control element (49) is assigned to the pilot valve closing member (33).

3. The valve according to Claim 2, **characterised in that** the control element (49) is designed as a radial projection on the pilot valve closing member (33).

4. The valve according to Claim 3, **characterised in that** the control element (49) is designed as a collar on the pilot valve closing member (33), the collar (49) having at least one pressure-relief bore (51).

5. The valve according to any of the preceding claims, **characterised in that** the aperture bores (39, 41) have the same diameter.

6. The valve according to any of the preceding claims, **characterised in that** the aperture bores (39, 41) are arranged so as to be offset relative to one another axially and/or over the circumference in the main piston (27).

7. The valve according to any of the preceding claims, **characterised in that** an aperture slot (53) is provided between the fluid inlet (21) and the supply aperture (3) which is preferably designed in the form of an annular gap (55) between the valve housing (7) and the main valve piston.

8. The valve according to any of the preceding claims, **characterised in that** a maximum volumetric flow controller (5) is provided in the main piston (27) in an outflow between the pilot valve chamber (37) and the fluid outlet (23).

9. The valve according to Claim 8, **characterised in that** the maximum volumetric flow controller (5) comprises a control piston (73) which is acted upon on a front face (75) by pressure of the fluid flowing out of the pilot chamber and is acted upon on a rear face (77) by a spring (79).

10. The valve according to Claim 9, **characterised in that** a fluid channel (81) is provided in the control piston (73), and control edges of the maximum volumetric flow controller (5) are formed in the control piston (73) and in the main piston (27) by means of bores (85, 87), the size of the opening cross-section that is limited by the control edges being dependent upon the position of the control piston (73).

11. The valve according to Claim 10, **characterised in that** the fluid channel (81) has a lateral inlet opening (83) on the control piston (73).

12. The valve according to any of Claims 9 to 11, **characterised in that** the control piston (73) is inserted into an axial bore (61) of the main piston (27) and, preferably, is held in the axial bore (61) by an end cap (93).

13. The valve according to any of the preceding claims, **characterised in that** the main piston (27) is acted on, via the pilot valve closing member (33), by a spring (63) such that it moves into a closed position.

14. The valve according to any of the preceding claims, **characterised in that** the pilot valve closing member (33) can be drawn away from a pilot valve seat (35) by the actuating device (69).

## Revendications

1. Soupape, notamment distributeur à siège proportionnel piloté, comprenant un corps (7) de soupape, qui a une entrée (21) pour du fluide et une sortie (23) pour du fluide, le courant de fluide entre l'entrée (21) pour du fluide et la sortie (23) pour du fluide étant réglable par un piston (27) principal, dans laquelle il est prévu, sur un côté (29) arrière du piston (27) principal, une chambre (37) de soupape pilote ayant un organe (33) de fermeture de soupape pilote, qui peut être déplacé par un dispositif d'actionnement et par lequel le courant de fluide, entre la chambre (37) de soupape pilote et la sortie (23) pour du fluide, est réglable, un diaphragme (3) d'afflux étant disposé entre l'entrée (21) pour du fluide et la chambre (37) de soupape pilote, la section transversale d'ouverture du diaphragme (3) d'afflux pouvant être rapetissée par un élément (49) de commande, **caractérisée en ce que** le diaphragme (3) d'afflux a plusieurs trous (39, 41) de diaphragme et **en ce que** la section transversale d'ouverture d'au moins l'un des trous (39, 41) du diaphragme peut être rapetissée par l'élément (49) de commande, la subdivision du diaphragme (3) d'afflux en plusieurs trous de diaphragme permettant de commuter le diaphragme (3) d'afflux en plusieurs degrés d'ouverture.

2. Soupape suivant la revendication 1, **caractérisée en ce que** l'élément (49) de commande est associé à l'organe (33) de fermeture de la soupape pilote.

3. Soupape suivant la revendication 2, **caractérisée en ce que** l'élément (49) de commande est constitué sous la forme d'une saillie radiale de l'organe (33) de fermeture de la soupape pilote.

4. Soupape suivant la revendication 3, **caractérisée en ce que** l'élément (49) de commande est constitué sous la forme d'un collet de l'organe (33) de fermeture de la soupape pilote, le collet (49) ayant au moins un trou (51) de détente de la pression.

5. Soupape suivant l'une des revendications précédentes, **caractérisée en ce que** les trous (39, 41) du diaphragme ont le même diamètre.

6. Soupape suivant l'une des revendications précédentes, **caractérisée en ce que** les trous (39, 41) du diaphragme sont disposés dans le piston (27) principal en étant décalés axialement et/ou sur le pourtour.

7. Soupape suivant l'une des revendications précédentes, **caractérisée en ce qu'**il est prévu, entre l'entrée (21) pour du fluide et le diaphragme (3) d'afflux, un diaphragme (53) à fente constitué, de préférence, sous la forme d'une fente (55) annulaire entre le corps (7) de la soupape et le piston principal.

8. Soupape suivant l'une des revendications précédentes, **caractérisée en ce qu'**il est prévu, dans le piston (27) principal, un régleur (5) du courant en volume maximum dans une purge entre la chambre (37) de la soupape pilote et la sortie (23) pour du fluide.

9. Soupape suivant la revendication 8, **caractérisée en ce que** le régleur (5) de courant en volume maximum a un piston (73) de réglage, qui est soumis, sur un côté (75) avant, à la pression du fluide sortant de la chambre pilote et, sur un côté (77) arrière, à l'action d'un ressort (79).

10. Soupape suivant la revendication 9, **caractérisée en ce qu'**il est prévu, dans le piston (73) de réglage, un passage (81) pour du fluide et il est formé, par des trous (85, 87), dans le piston (73) de réglage et dans le piston (27) principal, des bords de réglage du régleur (5) de courant en volume maximum, la dimension de la section transversale d'ouverture délimitée par les bords de réglage dépendant de la position du piston (73) de réglage.

11. Soupape suivant la revendication 10, **caractérisée en ce que** le passage (81) pour du fluide a une ouverture (83) d'entrée latérale sur le piston (73) de réglage.

12. Soupape suivant l'une des revendications 9 à 11, **caractérisée en ce que** le piston (73) de réglage est inséré dans un alésage (61) axial du piston (27) principal et est retenu dans l'alésage (61) axial, de préférence, par une coiffe (93) d'extrémité.

13. Soupape suivant l'une des revendications précédentes, **caractérisée en ce que** le piston (27) principal peut être mis dans une position d'obturation par un ressort (63) par l'intermédiaire de l'organe (33) de fermeture de la soupape pilote.

14. Soupape suivant l'une des revendications précédentes, **caractérisée en ce que** l'organe (33) de fermeture de la soupape pilote peut être éloigné d'un siège (35) de la soupape pilote par le dispositif (69) d'actionnement.
